# EUROPÄISCHE PATENTANMELDUNG

(11) **EP 1 076 050 A2**
(43) Veröffentlichungstag der Anmeldung: **14.02.2001**
(21) Anmeldenummer: 00115836.9
(22) Anmeldetag: 24.07.2000
(51) Int. Cl.: C04B 41/84, C04B 41/89

(54) **Verfahren zur Hydrophobierung von keramischen Oberflächen**

(30) Priorität: 10.08.1999 DE 19937325
(71) Anmelder: ERLUS BAUSTOFFWERKE AG, D-84088 Neufahrn (DE)
(72) Erfinder: DENDL, Peter, Dr., 93049 Regensburg (DE); INTERWIES, Jan, 84034 Landshut (DE)
(74) Vertreter: LOUIS, PÖHLAU, LOHRENTZ & SEGETH

(57) **Zusammenfassung**

Ein Verfahren zur Hydrophobierung von keramischen Oberflächen, insbesondere von Dachziegeln oder Ziegeln, bei dem eine keramische Oberfläche mit einer ein Fluorsilan enthaltenden Flüssigkeit behandelt und anschließend getrocknet wird. Hierdurch wird eine Hydrophobierung ohne Beeinträchtigung der Atmungsfähigkeit der keramischen Oberfläche erzielt.

## Beschreibung

Die Erfindung betrifft ein Verfahren zur Hydrophobierung von keramischen Oberflächen, insbesondere von grobkeramischen Körpern wie Dachziegeln.

Von in der Bautechnik verwendeten grobkeramischen Gegenständen, zum Beispiel von Dachziegeln oder Ziegeln aus Ton, wird u.a. Atmungsfähigkeit gefordert. Diese ist durch ein beim Brennvorgang sich einstellendes Kapillargefüge gewährleistet und führt dazu, daß in den Keramikkörper eingedrungene Feuchtigkeit in Trockenzeiten aufgrund der Kapillarwirkung rasch an die Oberfläche transportiert und durch Abtrocknen entfernt wird. Zugleich ist es jedoch erwünscht, die Wasseraufnahmefähigkeit von keramischen Oberflächen dieser Art möglichst weitgehend zu begrenzen, um die in den Keramikkörper eindringende Feuchtigkeitsmenge von vornherein gering zu halten. Hierzu ist es insbesondere von Dachziegeln seit langem bekannt, deren Oberflächen zu hydrophobieren, um aufgrund der wasserabweisenden Eigenschaft der Oberflächen ein rasches Abfließen von Regen- und Schmelzwasser zu erreichen. Üblicherweise erfolgt das Hydrophobieren oder Imprägnieren durch Polysiloxane, die meist in einem Tauchverfahren auf die Oberflächen aufgebracht werden. Es ist auch bekannt, die hydrophobe Eigenschaft dadurch zu steigern, daß auf die Oberflächen ein feines Pulver, z. B. aus Tonpartikeln, mittels einer organischen Silikonharzlösung aufgebracht und anschließend durch Aushärten des Silikonharzes fixiert wird (CH-A 268 258, DE 197 46 053 A1).

Um durch die Hydrophobierung der keramischen Oberflächen deren Atmungsfähigkeit nicht zu beeinträchtigen, erfordern die Auswahl der zur Hydrophobierung herangezogenen Polysiloxane und der Verfahrensablauf Sorgfalt. Denn eine zu dichte Belegung der Oberfläche und insbesondere der freien Flächen des Kapillargefüges kann zu einer Verringerung des zur Verfügung stehenden Atmungsquerschnitts führen. Deshalb gilt es bei der Hydrophobierung der in Betracht gezogenen keramischen Oberflächen stets einen Kompromiß zwischen Atmungsfähigkeit und Begrenzung der Wasserdurchlässigkeit zu schließen.

Die Wasseraufnahmefähigkeit verbunden mit der Neigung aufgenommenes Wasser aufgrund fehlender Atmungsfähigkeit zu halten bestimmt weiterhin die Frostbeständigkeit von grobkeramischen Oberflächen, insbesondere von Dachziegeln. Um die Frostbeständigkeit zu verbessern, d. h. die Wasserdurchlässigkeit herabzusetzen, werden keramische Oberflächen dieser Art in der geschilderten Weise hydrophobiert und häufig auch, verbunden mit einer besonderen gewünschten Farbgebung, glasiert. Die Glasur führt in der Regel zu einem weitgehend dichten Abschluß der Oberfläche gegen eindringendes Wasser. Jedoch können geringfügige Risse oder mechanische Beschädigungen der Glasur ein Eindringen von Wasser doch ermöglichen, das in Folge der Glasur dann aber sehr lange gehalten wird.

Aufgabe der Erfindung ist es daher, ein einfach zu handhabendes Verfahren zur Hydrophobierung keramischer Oberflächen vorzuschlagen, das eine gute hydrophobe Eigenschaft der Oberflächen ergibt, die Wasserdurchlässigkeit verringert, die Atmungsfähigkeit der Oberflächen aber nicht oder nur unwesentlich herabsetzt.

Erfindungsgemäß wird diese Aufgabe gelöst durch das Vorgehen gemäß Patentanspruch 1.

Als Fluorsilane kommen fluoralkylfunktionelle Silane in Betracht, die mit Wasser unter Hydrolyse und Abspaltung von Ethanol zu einem reaktiven Silanol reagieren, wobei das Silanol chemisch an ein anorganisches Substrat gebunden werden kann. Durch chemische Reaktion mit der zu behandelnden Oberfläche wird eine Si-O-Bindung an die Oberfläche ausgebildet. Daran schließt sich eine Quervernetzung unter Ausbildung eines Siloxan-Netzwerks an. Die Fluorsilane ergeben außerordentlich dünne Schichten im Nanometerbereich, die in den Porenöffnungen des Kapillargefüges der keramischen Oberfläche und auf den freien Flächen des Kapillargefüges nahe der Oberfläche im Inneren des Keramikkörpers aufgebaut werden. Daher läßt sich mittels der Fluorsilane eine Hydrophobierung insbesondere grobkeramischer Oberflächen erreichen, durch welche die Atmungsfähigkeit nicht herabgesetzt wird. Da zugleich die Fluorsilan-Schichten eine ausgeprägte hydrophobe und lipophobe Eigenschaft der keramischen Oberfläche erzeugen, können Schmutzansammlungen darauf vermieden werden, weil sie allein durch Beregnung oder Berieselung mit Wasser fortgespült werden. Daraus folgt wiederum, daß durch Schmutzansammlungen bedingtes Anstehen von Wasser und bleibende Feuchtigkeit vermieden werden, durch die üblicherweise das Eindringen von Wasser mit den beschriebenen nachteiligen Folgen in das Innere des Keramikkörpers besonders begünstigt ist. Damit wird trotz Aufrechterhaltung der erwünschten Atmungsfähigkeit die Wasseraufnahmefähigkeit der keramischen Oberfläche herabgesetzt.

Fluorsilane der beschriebenen Art sind im Handel unter dem Markennamen DYNASYLAN F 8261 (in Abwandlungen davon unter F 8262 und F 8263) der Firma Sivento Chemie GmbH, Düsseldorf, erhältlich.

Die Fluorsilane können mit Wasser und Lösemitteln, z. B. Ethanol, gemischt werden, so daß das Auftragen auf die zu behandelnde Oberfläche mit den üblichen Beschichtungstechniken wie Tauchen, Sprühen, Streichen oder Polieren möglich ist. An das Auftragverfahren schließt sich ein Trocknungs- oder Vernetzungsprozeß an, der durch thermische Behandlung oder mit Hilfe von UV- oder Wärmestrahlung durchführbar ist. Die thermische Behandlung kann zwischen 80 und 150°C durchgeführt werden. Günstiger ist jedoch ein Einbrennvorgang bei Temperaturen bis 600°C, weil sich gezeigt hat, daß dadurch ohne ins Gewicht fallende Herabsetzung der erhaltenen hydrophoben Eigenschaft eine erhebliche Steigerung der mechanischen Belastbarkeit, wie Abriebfestigkeit, mit einhergeht.

Die Fluorsilane haben weitere Eigenschaften, die sie auch für die Verwendung zur Hydrophobierung von keramischen Oberflächen geeignet machen. So besteht keine Gefahr, daß dadurch Farben der Oberflächen verändert oder beeinträchtigt werden, weil aufgrund der so geringen Schichtdicken die Reflexionsfähigkeit der keramischen Oberflächen nicht beeinträchtigt wird. Weiterhin wird durch die genannte hydrophobe und lipophobe Eigenschaft eine deutliche Selbstreinigungseigenschaft der dadurch behandelten keramischen Oberflächen erzielt. Deshalb kann damit gerechnet werden, daß Dachbaustoffe, insbesondere Dachziegel sowie Klinker- und Fassadenwände, die erfindungsgemäß behandelte keramische Oberflächen aufweisen, allein durch Regen (oder durch gezielte Berieselung mit Wasser) von Schmutz frei bleiben. Selbst durch die Ausbildung von gezielten Erhebungen oder Rauhigkeitsstrukturen schon selbstreinigend gemachte keramische Oberflächen (vgl. DE 197 46 053A1) können durch Hydrophobierung mit Fluorsilanen eine Steigerung der selbstreinigenden Eigenschaft erfahren. Wenn solche Strukturen durch den Brand der keramischen Oberfläche ausgebildet sind, z.B. durch eine quasi-keramische Bindung von Pulverpartikeln an die Oberfläche, kann die zur Erzielung der Selbstreinigungseigenschaft solcher Strukturen notwendige Hydrophobierung durch ein Fluorsilan erhalten werden.

Darüber hinaus sind die Fluorsilane sehr UV- und witterungsbeständig, wodurch die stark hydrophobe Eigenschaft der keramischen Oberflächen lang erhalten bleibt. Diese Eigenschaft läßt sich mit einer Silikonisierung (z.B. mit dem im Handel erhältlichen Silikon S405 der Fa. Wacker) kombinieren, bei der zunächst durch einen herkömmlichen Silikonisierprozess mit einem Polysiloxan die keramische Oberfläche beschichtet wird und daraufhin eine Beschichtung mit einem Fluorsilan durchgeführt wird. Das Fluorsilan wirkt in diesem Fall neben seiner hydrophoben Eigenschaft als UV-Schutzschicht für das wenig UV-beständige Polysiloxan.

Die Fluorsilane haben von sich aus bereits eine bewuchshemmende Wirkung, die sie sogar zum Einsatz als Antifouling-Mittel in Farben geeignet macht. Diese Wirkung kann nach einer Weiterbildung der Erfindung noch unterstützt werden, indem neben der Behandlung der keramischen Oberfläche mit einem Fluorsilan auch eine Behandlung mit einem gesonderten bewuchshemmenden Mittel durchgeführt wird. Grundsätzlich könnte das bewuchshemmende Mittel neben dem Fluorsilan in der Trägerflüssigkeit, mit der die keramische Oberfläche behandelt wird, enthalten sein. Als solche Mittel kommen diejenigen in Betracht, die in bekannten Antifouling-Farben zum Einsatz kommen, z. B. Kupfer-, Zink- oder Zinnpräparate. Es kann aber auch daran gedacht sein, daß bewuchshemmende Gruppen oder Radikale der genannten Verbindungen unmittelbar in das Netzwerk der Fluorsilane eingebunden sind.

Die erfindungsgemäß eingesetzten Fluorsilane haben neben ihrer hydrophoben Eigenschaft auch eine hohe mechanische und chemische Widerstands- und Haftfestigkeit. Daher ist nach der Trocknung bzw. Aushärtung keine Beeinträchtigung der erzielten hydrophoben Eigenschaft durch mechanische Abtragung zu befürchten. So können beispielsweise erfindungsgemäß behandelte Dachziegel in üblicher Weise transportiert und nach dem Eindecken auch begangen werden.

Die starke hydrophobe Eigenschaft und die damit verbundene Fähigkeit zur Selbstreinigung der erfindungsgemäß behandelten grobkeramischen Oberflächen, vor allem von Dachziegeln, führt zu einer ständigen Freihaltung der Oberfläche von insbesondere fettigem Schmutz und Ruß, d. h. von Verunreinigungen, die vor allem in Industriegegenden zu erwarten sind. Verunreinigungen dieser Art setzen häufig die gewünschte Atmungsfähigkeit herab und fördern dadurch die Neigung aufgenommenes Wasser länger zu halten ohne daß im gleichen Maß die Wasseraufnahmefähigkeit verringert wird. Damit wird die Frostbeständigkeit der keramischen Oberflächen verschlechtert. Durch die genannte Freihaltung der Oberflächen von Verschmutzungen dieser Art wirkt die erfindungsgemäße Behandlung selbst bei glasierten grobkeramischen Oberflächen, da hierdurch anstehendes Wasser und dessen Eindringen in eventuell vorhandene mechanische Beschädigungsstellen oder Sprünge der Glasur vermieden wird.

## Patentansprüche

1. Verfahren zur Hydrophobierung von keramischen Oberflächen, insbesondere von Dachziegeln oder Ziegeln, bei dem eine keramische Oberfläche mit einer ein Fluorsilan enthaltenden Flüssigkeit behandelt und anschließend getrocknet wird.

2. Verfahren nach Anspruch 1,
**dadurch gekennzeichnet**,
daß die Oberfläche während einer Zeitdauer behandelt wird, die ein Eindringen der Flüssigkeit in das oberflächennahe Kapillargefüge des die Oberfläche aufweisenden Keramikkörpers erlaubt.

3. Verfahren nach Anspruch 1 oder 2,
**dadurch gekennzeichnet**,
daß die keramische Oberfläche zunächst in bekannter Weise mit einem Polysiloxan hydrophobirt wird und sich daran eine Behandlung mit einem Fluorsilan anschließt.

4. Verfahren nach einem der Ansprüche 1 bis 3,
**dadurch gekennzeichnet**,
daß die Flüssigkeit auch eine als bewuchshemmendes Mittel wirksame Verbindung enthält.

5. Verfahren nach Anspruch 4,
**dadurch gekennzeichnet**,
daß die als bewuchshemmendes Mittel wirksame Verbindung an das Fluorsilan gebunden ist.

6. Keramikkörper, insbesondere Dachziegel oder Ziegel, mit einer ein Kapillargefüge aufweisenden hydrophobierten Oberfläche,
**dadurch gekennzeichnet**,
daß die Oberfläche mit einem Fluorsilan behandelt ist.

7. Keramikkörper nach Anspruch 6,
**dadurch gekennzeichnet**,
daß die durch Behandlung mit Fluorsilan entstandene Schicht auch die freien Flächen des oberflächennahen Kapillargefüges im Inneren des Keramikkörpers bedeckt.

8. Keramikkörper nach Anspruch 6 oder 7,
**dadurch gekennzeichnet**,
daß die durch Behandlung mit Fluorsilan entstandene Schicht eine bewuchshemmende Verbindung enthält.

9. Keramikkörper nach einem der Ansprüche 6 bis 8,
**dadurch gekennzeichnet**,
daß die Oberfläche des Keramikkörpers in an sich bekannter Weise mit einem Polysiloxan hydrophobiert ist und über der Polysiloxanbeschichtung eine Beschichtung mit einem Fluorsilan vorgesehen ist.
